(19) Europäisches Patentamt
European Patent Office
Office européen des brevets

(11) **EP 1 744 311 A2**

(12) **EUROPEAN PATENT APPLICATION**

(43) Date of publication:
**17.01.2007 Bulletin 2007/03**

(51) Int Cl.:
***G11B 7/135*** (2006.01)

(21) Application number: **06117111.2**

(22) Date of filing: **13.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.07.2005 JP 2005206876**

(71) Applicant: **Toshiba Samsung Storage Technology Corporation**
**Kawasaki City, Kanagawa 212-0013 (JP)**

(72) Inventors:
• **Uchiyama, Mineharu**
**,Toshiba Samsung St.Tech.Corp**
**Saiwai-ku Kanagawa**
**,KawasakiCity212-0013 (JP)**
• **Nishida, Shunsuke**
**,Toshiba Samsung St.Tech.Corp**
**Saiwai-ku Kanagawa**
**,KawasakiCity212-0013 (JP)**

(74) Representative: **Henkel, Feiler & Hänzel**
**Patentanwälte**
**Maximiliansplatz 21**
**80333 München (DE)**

(54) **Optical pickup apparatus and optical information processing apparatus**

(57)     An optical pickup apparatus comprises an lens assembly including an object lens arranged for either a first optical disk (BD) or a second optical disk (HD-DVD) different from the first optical disk in terms of substrate thickness and a liquid crystal lens and is adapted to irradiate a light beam with a numerical aperture of 0.85, turning off the liquid crystal lens, when recording signals on/reproducing signals from a BD and a light beam with a numerical aperture of 0.65, turning on the liquid crystal lens, when recording signals on/reproducing signals from an HD-DVD.

Fig. 2 A

EP 1 744 311 A2

**(Cont. next page)**

Fig. 2 B

BD
1a
21
22
OFF
405nm

Fig. 2 C

HD-DVD
1b
21
22
ON
405nm

**Description**

**1. TECHNICAL FIELD**

The present invention relates to an optical pickup apparatus and an optical information processing apparatus mounted by an optical pickup apparatus. More particularly, it relates to an optical information processing apparatus adapted to execute recording processes and reproduction processes on optical disks having different substrate thicknesses and different numerical apertures.

**2. BACKGROUND ART**

Optical information processing apparatus for optically recording information on and reproducing information from optical storage mediums such as CDs (compact disks), CD-ROMs, DVDs (digital versatile disks) and magneto-optical disks (to be globally referred to as optical disks hereinafter) have been developed to date (doing at least either a recording operation or a reproducing operation is referred to recording/reproduction hereinafter). Additionally, HD-DVDs and BDs (Blu-Ray disks) also have been developed recently as next generation high density optical disks.

Meanwhile, optical disk apparatus that can handle optical disks of a plurality of different types by means of a single apparatus have also developed in order to cope with a situation that optical disks of different types as listed above differ from each other in terms of the thickness from the substrate surface to the recording layer (substrate thickness), the wavelength of laser beam to be used for recording/reproduction and the numerical aperture of the objective lens.

For instance, Jpn. Pat. Appln. Laid-Open Publications No. 10-241191 and No. 10-172151 describes optical pickup apparatus that can write signals on and read signals from popular optical disks such as CDs and DVDs by means of a single apparatus. According to the Publication No. 10-241191, the numerical aperture is switched by means of a liquid crystal shutter to correct aberrations. The Publication No. 10-172151 describes an arrangement for supporting two objective lenses including one for CDs and one for DVDs by a shaft sliding type supporting means and rotating the supporting means around the shaft to switch from one of the objective lens to the other and vice versa.

Furthermore, ISOM03 Th-G-08 (Minolta) "Blu-ray Disk / DVD Compatible Objective Lens Assembly" (Research Materials for Optical Memory International Symposium 2003) describes an arrangement for correcting the aberration that arises due to the difference of substrate thickness between BDs and DVDs by combining an objective lens for BDs and a wavelength selection element (WSE) in order to make it possible to handle both BDs and DVDs.

Aberrations that arise due to the difference in the substrate thickness are corrected by means of a liquid crystal shutter according to the Publication No. 10-241191. The cited invention is made in view of optical disks of two different formats using beams of light of different wavelengths such as CDs and DVDs. However, the above-cited patent document does not describe how to use the liquid crystal shutter for optical disks of different types, taking the situation where optical disks of a variety of different types are currently available and they are different in terms of substrate thickness, numerical aperture and wavelength of laser beam. If the difference of numerical aperture and that of substrate thickness to be corrected are too large, there arises a problem of image height and that of eccentricity of the part of the liquid crystal shutter that operates to correct aberrations and the objective lens to consequently degrade the optical characteristics.

The above-cited Jpn. Pat. Appln. Laid-Open Publication No. 10-172151 describes the use of different objective lenses for DVDs and for CDs but the disclosed arrangement requires improvements in terms of mechanical reliability and productivity. Finally, "Blu-ray Disk / DVD Compatible Objective Lens Assembly" proposes the use of a combination of an objective lens for BDs and a wavelength selection element in order to correct aberrations that arise due to the difference of substrate thickness between BDs and DVDs. However, the proposed arrangement is accompanied by problems in terms of downsizing, cost and incompatibility.

**3. DISCLOSURE OF THE INVENTION**

In view of the above-identified circumstances, it is therefore the object of the present invention to make it possible for a single optical disk apparatus to deal with optical disks of two different types such as HD-DVDs and BDs that utilize laser beams (light beams) of a same wavelength but are different from each other in terms of substrate thickness and also make such optical disks compatible with optical disks of still other types such as CDs and DVDs. An optical pickup apparatus and an optical information processing apparatus according to the present invention can achieve the above object and operate for recording processes and reproduction processes with such optical disks.

In an aspect of the present invention, there is provided an optical pickup apparatus for at least either recording signals on an optical disk or reproducing signals from an optical disk (recording/reproduction) by irradiating a light beam onto the optical disk, the apparatus comprising:

a light source for irradiating a light beam onto the optical disk;

an objective lens arranged at the side facing the recording surface of the optical disk; and

an optical member arranged on the optical axis of the objective lens at the side of the light source so as to turn ON/OFF (activate/deactivate) (its function of) corrective aberration for changing the optical phase thereof according to a control signal;

the apparatus being adapted to irradiate a light beam from the light source onto a first optical disk with a first numerical aperture of the objective lens as selected by turning ON/OFF the optical member when the optical disk is a first optical disk and signals are to be recorded on or reproduced from the first optical disk but irradiate a light beam from the light source onto a second optical disk having a substrate thickness greater than the first optical disk with a second numerical aperture of the objective lens smaller than the first numerical aperture as selected by turning ON/OFF the optical member when the optical disk is a second optical disk and signals are to be recorded on or reproduced from the second optical disk.

In another aspect of the present invention, there is provided an optical information processing apparatus, comprising:

an optical pickup apparatus adapted to move an optical pickup head in the direction of the optical axes and a radial direction of the optical disk to record/reproduce data;

a spindle motor for driving an optical disk to rotate; and

a controller for controlling the operation of recording signals on or reproducing signals from the optical disk;

the optical pickup apparatus including:

a light source for irradiating a light beam onto the optical disk;

an objective lens arranged at the side facing the recording surface of the optical disk; and

an optical member arranged on the optical axis of the objective lens at the side of the light source so as to turn ON/OFF (activate/deactivate) (its function of) corrective aberration for changing the optical phase thereof according to a control signal;

the apparatus being adapted to irradiate a light beam from the light source onto a first optical disk with a first numerical aperture of the objective lens as selected by turning ON/OFF the optical member when the optical disk is a first optical disk and signals are to be recorded on or reproduced from the first optical disk but irradiate a light beam from the light source onto a second optical disk having a substrate thickness greater than the first optical disk with a second numerical aperture of the objective lens smaller than the first numerical aperture as selected by turning ON/OFF the optical member when the optical disk is a second optical disk and signals are to be recorded on or reproduced from the second optical disk.

## 4. BRIEF DESCRIPTION OF THE DRAWINGS

FIG. 1 is a schematic illustration of the first embodiment of optical pickup apparatus according to the present invention, showing the configuration thereof;

FIG. 2A is a schematic illustration of the configuration of the lens assembly of the first embodiment, FIG. 2B is another schematic illustration of the configuration of the lens assembly of the first embodiment, and FIG. 2C is still another schematic illustration of the configuration of the lens assembly of the first embodiment;

FIG. 3 is a schematic illustration of the quantitative corrective aberration by the liquid crystal lens of the first embodiment;

FIG. 4 is a schematic illustration of the optical aberration caused by an eccentricity of the first embodiment;

FIG. 5 is a schematic illustration of the optical aberration caused by an image height of the first embodiment;

FIG. 6 is a schematic illustration of an alternative lens assembly of the first embodiment;

FIG. 7 is a schematic illustration of the second embodiment of optical pickup apparatus according to the present invention, showing the configuration thereof;

FIG. 8A is a schematic illustration of the configuration of the lens assembly of the second embodiment, FIG. 8B is another schematic illustration of the configuration of the lens assembly of the second embodiment, FIG. 8C is still another schematic illustration of the configuration of the lens assembly of the second embodiment, and FIG. 8D is still another schematic illustration of the configuration of the lens assembly of the second embodiment;

FIG. 9 is a schematic illustration of the third embodiment of optical pickup apparatus according to the present invention, showing the configuration thereof;

FIG. 10A is a schematic illustration of the configuration of the lens assembly of the third embodiment, FIG. 10B is another schematic illustration of the configuration of the lens assembly of the third embodiment, and FIG. 10C is still another schematic illustration of the configuration of the lens assembly of the third embodiment;

FIG. 11 is a schematic illustration of the fourth embodiment of optical pickup apparatus according to the present invention, showing the configuration thereof;

FIG. 12 is a schematic illustration of the configuration of the lens assembly of the fourth embodiment;

FIG. 13 is a schematic illustration of the electrochromism mirror to be used in the fourth embodiment, showing the configuration thereof;

FIG. 14 is a characteristic graph illustrating the transmission characteristic of the electrochromism mirror of the fourth embodiment; and

FIG. 15 is a schematic block diagram of an optical information processing apparatus including an optical pickup apparatus according to the present invention.

## 5. DETAILED DESCRIPTION OF THE PREFERRED EMBODIMENTS

Now, the present invention will be described further by referring to the accompanying drawings that illustrate preferred embodiments of the invention.

[First Embodiment]

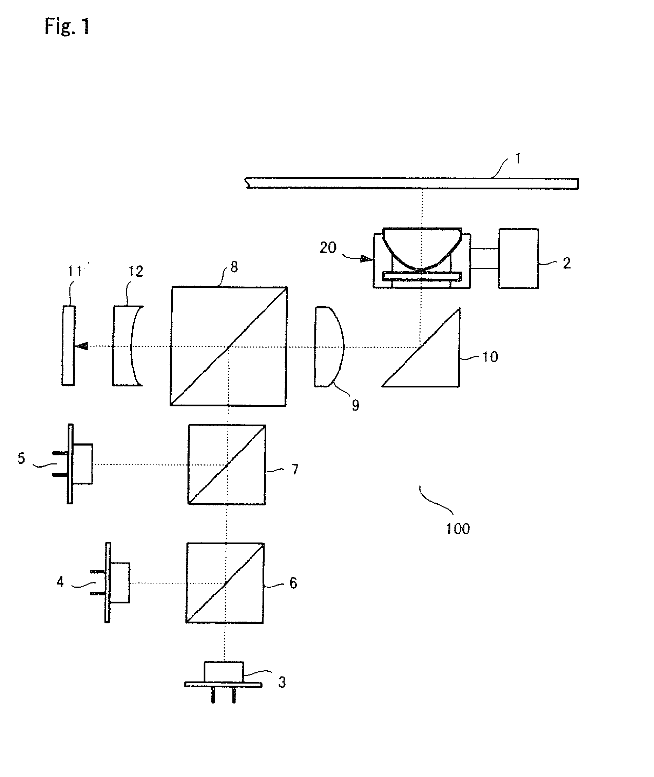

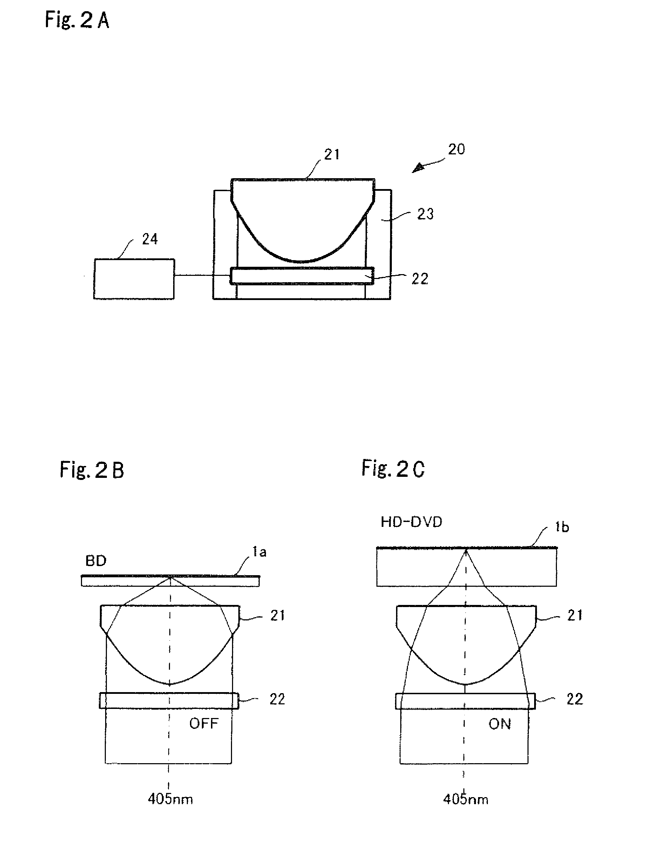

FIG. 1 is a schematic illustration of the first embodiment of optical pickup apparatus according to the present invention, showing the configuration thereof and FIGS. 2A through 2C are schematic illustrations of the configuration of a principal part of the first embodiment of optical pickup apparatus.

Referring to FIG. 1 illustrating an optical pickup apparatus 100 of the first embodiment, an optical information recording medium (optical disk) 1 is a recording medium, which may be a DVD, HD-DVD, a BD, or a CD. An actuator 2 is adapted to drive a lens assembly 20 including an objective lens. The configuration of the lens assembly 20 will described in detail below by referring to FIGS. 2A through 2C. The lens assembly 20 includes a mechanism for driving the objective lens highly accurately at high speed that is incorporated in the lens assembly 20. The lens assembly 20 is driven by the actuator 2 to move along two axes including an axis extending in the direction of the optical axis of the objective lens and an axis perpendicular to the optical axis (or the inner peripheral direction and the outer peripheral direction of the optical disk 1) so as to control the position of the light spot on the optical disk 1 from the objective lens.

In FIG. 1, there are also shown a laser beam source 3 for emitting a light beam onto an HD-DVD or a BD, a laser beam source 4 for emitting a light beam onto a DVD and a laser beam source 5 for emitting a light beam onto a CD. The wavelength of the laser beam emitted from the laser beam source 3 is 405 nm (blue wavelength) and the wavelength of the laser beam emitted from the laser beam source 4 is 655 nm (red wavelength) while the wavelength of the laser beam emitted from the laser beam source 5 is 780 nm (infrared wavelength).

In FIG. 1, there are also shown a dichroic mirror 6 and a trichroic mirror 7, which operate to make the light beam from any of the laser beam sources 3, 4, 5 enter a beam splitter 8 along the same optical axis. Thus, the light beam from the laser beam source 3 is transmitted through the dichroic mirror 6 and the trichroic mirror 7 to enter the beam splitter 8 and the light beam from the laser beam source 4 is reflected by the dichroic mirror 6 and transmitted through the trichroic mirror 7 to enter the beam splitter 8, whereas the light beam from the laser beam source 5 is reflected by the trichroic mirror 7 to enter the beam splitter 8.

The beam splitter 8 reflects the light beam from the selected one of the laser beam sources 3, 4, 5 toward the lens assembly 20 and transmits light reflected by the optical disk 1. In FIG. 1, there are also shown a collimator lens 9 for converging the light beam reflected by the beam splitter 8 and producing parallel rays of light and a reflector mirror 10 for reflecting the light beam from the collimator lens 9 and leading it to the optical disk 1 by way of the lens assembly 20.

Additionally, in FIG. 1, there are also shown a light receiving element 11. Light that strikes and is reflected by the optical disk 1 passes through the lens assembly 20, the reflector mirror 10 and the collimator lens 9 and then is transmitted through the beam splitter 8 to enter the light receiving element 11. Then, as a result, the light receiving element 11 detects information (video and/or audio signals) recorded on the optical disk 1, a tracking signal and a focusing signal. A cylindrical lens 12 is arranged between the light receiving element 11 and the beam splitter 8 in order to detect the focusing signal.

FIG. 2A is a schematic illustration of the configuration of the lens assembly 20 of the first embodiment. The lens assembly 20 includes an objective lens 21 arranged for BDs at the side facing the optical disk 1, a liquid crystal element (liquid crystal lens 22) that is another optical member separated from the objective lens 21 by a predetermined gap and a leans holder 23 where the objective lens 21 and the liquid crystal lens 22 are mounted. A drive circuit 24 for turning on and off the liquid crystal lens 22 is also provided. The lens assembly 20 is controlled for its position by the actuator 2 so as to follow the surface oscillations and the eccentricities of the optical disk 1. It is also utilized for tracking control and focusing control necessary for the purpose of recording information on the optical disk 1 and reproducing information recorded on the optical disk 1.

The liquid crystal lens 22 has a function of operating as a liquid crystal shutter. It is adapted to change the refractive index in response to the control voltage applied thereto from the drive circuit 24 so that it can change the optical phase. In other words, the liquid crystal lens 22 corrects the spherical aberration that arises due to the difference of substrate thickness between a BD and an HD-DVD.

FIGS. 2B and 2C illustrate the operation of the liquid crystal lens 22. FIG. 2B illustrates the operation of the liquid crystal lens 22 for recording signals on or reproducing signals from a BD, whereas FIG. 2C illustrates the operation of the liquid crystal lens 22 for recording signals on or reproducing signals from an HD-DVD. The wavelength of the laser beam that is emitted from the laser beam source 3 so as to be used for recording signals on or reproducing signals from a BD or an HD-DVD is 405 nm. It is known that the numerical aperture suited for recording signals on and reproducing signals from a BD (NA-BD), or the numerical aperture NA of the objective lens, is 0.85, whereas the numerical aperture suited for recording signals on and reproducing signals from an HD-DVD (NA-HD) is 0.65.

In FIG. 2B, the substrate thickness of BD (1a) is 0.1 mm. At this time, the liquid crystal lens 22 is turned off so that it operates as a plate having parallel surfaces and hence no aberration takes place. On the other hand, in FIG. 2C, the substrate thickness of HD-DVD (1b) is 0.6 mm. At this time, the liquid crystal lens 22 is turned on.

As shown in FIG. 2B, the liquid crystal lens 22 is turned off when recording signals on or reproducing signals from a BD (1a). Thus, light entering the liquid crystal lens 22 does not give rise to any aberration before it enters the objective lens 21 so that a spot that matches the BD (1a) is formed to record signals on or reproduce signals from the BD.

As shown in FIG. 2C, the liquid crystal lens 22 is turned on when recording signals on or reproducing signals from an HD-DVD (1b). Thus, the orientation of the liquid crystal molecules of the liquid crystal lens 22 is changed to by turn change the refractive index of the liquid crystal lens 22 so as to add corrective aberration necessary for correcting the spherical aberration produced by the difference of substrate thickness between the BD and the HD-DVD for the light beam entering the objective lens 21. As a result, the aberration produced due to the difference of substrate thickness between the substrate of the BD (1a) and that of the HD-DVD (1b) is cancelled by the corrective aberration produced by the liquid crystal lens 22 and the numerical aperture NA is reduced to 0.65 so that a spot that matches the HD-DVD (1b) is formed to record signals on or reproduce signals from the HD-DVD (1b).

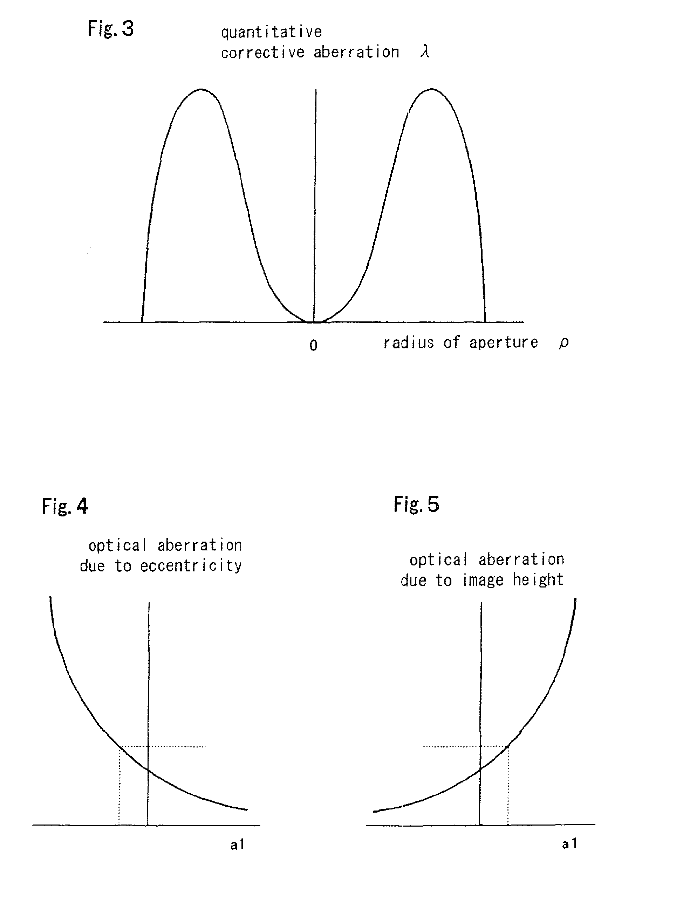

FIG. 3 schematically illustrates of the aberration that is produced for the numerical aperture of $\rho$ when the liquid crystal lens 22 is turned on. In the graph of FIG. 3, the horizontal axis represents the position on a line perpendicular to optical axis and 0 represents the center of the optical axis whereas the vertical axis represents the quantitative spherical aberration $\lambda$. Normally, a light beam produces a circular beam spot and the spherical aberration changes in a radial direction. The two peaks of the spherical aberration are raised high when the substrate thickness increases.

Thus, the liquid crystal lens 22 operates as spherical aberration correction means and the drive circuit 24 operates as a spherical aberration control circuit. If the quantitative corrective aberration $\lambda$ that is produced by the liquid crystal lens 22 of FIG. 3 is expressed by formula (1) shown below, then $\rho^2$ in the formula is the term of power.

$$\text{quantitative corrective aberration } \lambda =$$
$$a1 \cdot \rho^2 + a2 \cdot \rho^4 + a3 \cdot \rho^6 \quad \dots (1),$$

(where $\rho$ is the radius of aperture normalized by the radius of aperture of HD-DVD).

In the formula (1) above, $\rho$ is the radius of aperture normalized by the radius of aperture of HD-DVD and a1 is the coefficient of power whereas a2 is the coefficient of correction of the aberration error of degree three and a3 is the coefficient of correction of the aberration error of degree five.

When collimated light enters the liquid crystal lens 22, incident light entering the objective lens 21 for BDs becomes diffused light if a1 > 0, whereas incident light entering the objective lens 21 for BDs becomes converged light if a1 < 0. The substrate thickness of an HD-DVD is 0.6 mm and hence thicker than the substrate thickness of a BD, which is equal to 0.1 mm, so that the spherical aberration can be partly canceled by making a1 of the liquid crystal lens 22 positive and turning incident light of the objective lens 21 for BDs into diffused light. In other words, a2 decreases as a1 increases.

The spherical aberration that is produced due to the difference of substrate thickness is proportional to the fourth power of the numerical aperture and hence the quantitative spherical aberration to be corrected is large when disks having a large numerical aperture are to be made compatible. Since coma arises as a function of the quantitative spherical aberration to be corrected because of the eccentricity of the objective lens 21 for BDs and the liquid crystal lens 22, as shown in FIG. 4, a1 can take a permissible value from the viewpoint of accuracy and reliability of assembling (the right side part relative to the broken line in FIG. 4) and the limit value is the lower limit for a1.

On the other hand, the image height characteristic is degraded as the value of a1 increases as shown in FIG.

5. The image height is the displacement of the focal position from the optical axis that is produced by the inclination of incident light. Thus, the permissible value that a1 can take is limited by an upper limit due to the inclination from the viewpoint of accuracy and reliability of assembling (the left side part relative to the broken line in FIG. 5).

In FIGS. 4 and 5, the horizontal axis represents the coefficient of power a1 and the vertical axis represents the extent of aberration. The extent of aberration changes as a function of the substrate thickness and the numerical aperture. The permissible value of a1 is the design allowance. The range of permissible value for BDs is small because the wavelength is short and the numerical aperture is large.

The permissible value of a1 is defined by $-14 \leq a1 \leq 14$ when the difference of substrate thickness between the BD and the HD-DVD is 0.5 mm and the numerical aperture of the HD-DVD is 0.65. With this arrangement, it is possible to realize an HD/BD compatible optical system showing excellent characteristics in terms of both the eccentricity characteristic and the image height characteristic.

When recording signals on or reproducing signals from a DVD or a CD by means of a light beam from the laser beam source 4 or the laser beam source 5, whichever appropriate, of the pickup apparatus 100 of FIG. 1, although not shown, it is possible to apply a known compatible optical system for BDs and DVDs (e.g., by means of the technique described in **" Blu-ray Disk / DVD Compatible Objective Lens Assembly"**) or a compatible optical system for HD-DVDs and DVDs/CDs. More specifically, the liquid crystal lens 22 is turned off when using a compatible optical system for BDs whereas the liquid crystal lens 22 is turned on when using a compatible optical system for HD-DVDs.

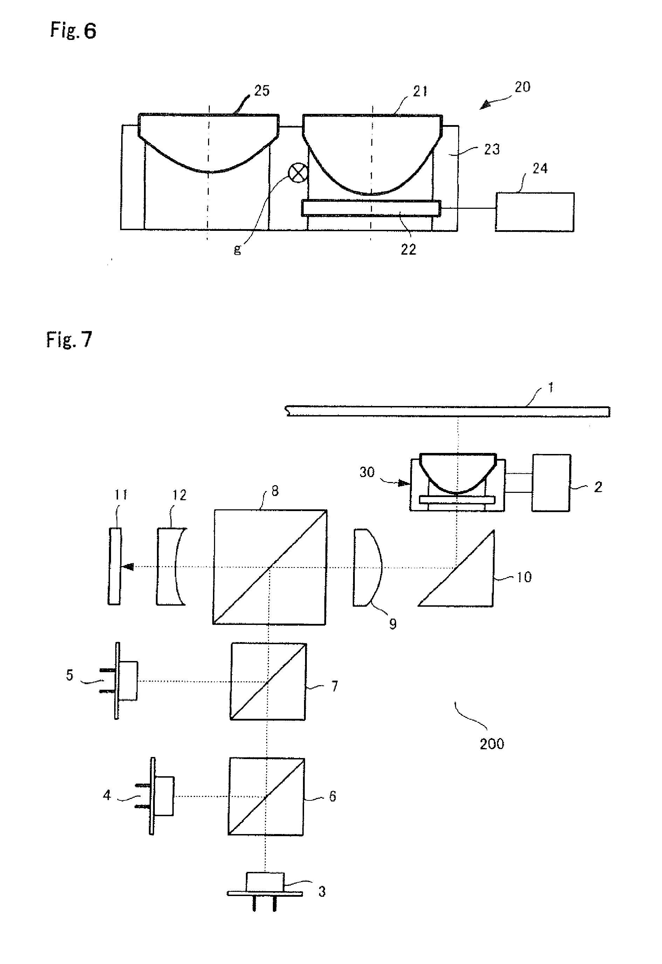

FIG. 6 illustrates the configuration of another lens assembly 20. The lens assembly 20 of FIG. 6 is formed by additionally and integrally mounting a DVD/CD compatible objective lens 25 in the lens holder 23 in addition to the objective lens 21 and the liquid crystal lens 22 of FIG. 1 and the lens position of the additional objective lens 25 is controlled also by means of the actuator 2. In short, FIG. 6 shows a pickup apparatus with which ordinary DVDs and CDs can be used for recording/reproducing signals.

A light beam with a wavelength of 405 nm that is required to record signals on and reproduce signals from HD-DVDs and BDs is emitted from the laser beam source 3 and entered to the objective lens 21 arranged for BDs and the liquid crystal lens 22. A light beam with a wavelength of 655 nm that is required to record signals on and reproduce signals from DVDs and emitted from the laser beam source 4 is entered to the objective lens 25 for DVDs/CDs. A laser beam with a wavelength of 780 nm that is required to record signals on and reproduce signals from CDs and emitted from the laser beam source 5 is also entered to the objective lens 25 for DVDs/CDs.

Since the laser beams that enter the respective lenses 21, 22, 25 have different wavelengths, one of the laser beam sources 3, 4, 5 is selected for operation and the optical path is selected by means of a wavelength-selective optical part such as a dichroic prism.

With the above-described first embodiment, it is possible to record signals on and reproduce signals from disks of four different types by selectively using the objective lens 21 arranged for BDs and the liquid crystal lens 22 or the DVD/CD compatible objective lens 25. Additionally, by selectively using two objective lenses 21 and 25, it is possible to simplify the optical system for light beam separation and reduce the loss on the optical path for each light beam.

While the lens assembly 20 of FIG. 6 is controlled for its position by the actuator 2 so as to follow the surface oscillations and the eccentricities of the optical disk for recording/reproduction, the lens holder 23 can be displaced relatively easily when the number of revolutions of the disk per unit time is higher than 10 KHz to adversely affect the stability of the servo system. To minimize such a problem, the objective lens 21 and the liquid crystal lens 22 that are heavy are arranged at respective positions located close to the center of gravity (g) of the moving part of the actuator 2. With this arrangement, it is possible to suppress the displacement of the lens holder 23 and realize a stable servo mechanism in terms of surface oscillations and eccentricities.

[Second Embodiment]

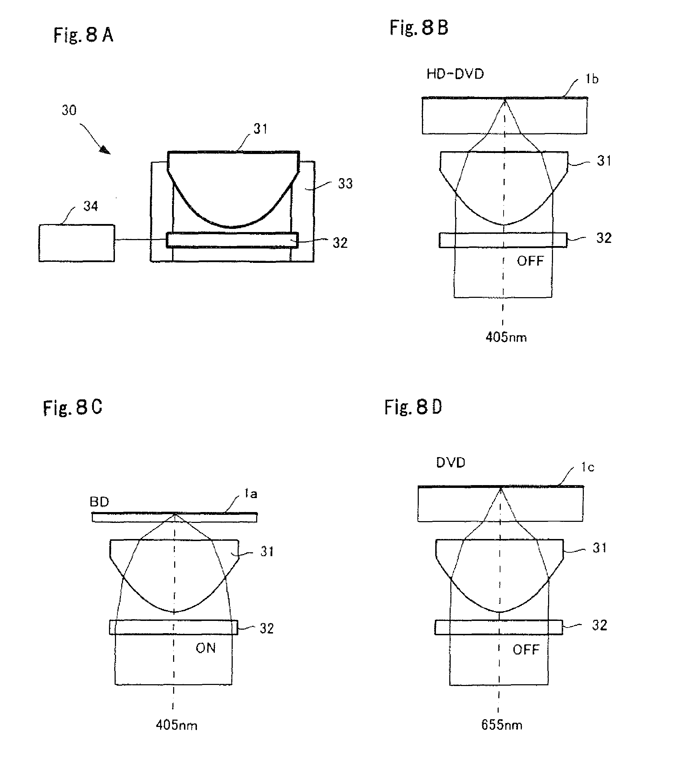

Now, the second embodiment of the present invention will be described by referring to FIGS. 7, 8A, 8B, 8C and 8D. The optical pickup apparatus 200 of FIG. 7 differs from the optical pickup apparatus 100 of FIG. 1 in that it includes a lens assembly 30 that is different from the lens assembly 20 of the optical pickup apparatus 100 of FIG. 1. Otherwise, the two optical pickup apparatus are identical with each other and hence the second embodiment will be described only in terms of the lens assembly 30 below.

FIG. 8A is a schematic illustration of the configuration of the lens assembly 30 of the second embodiment. The lens assembly 30 includes an objective lens 31 arranged for HD-DVDs at the side facing the optical disk 1, a liquid crystal lens 32 that is another optical member separated from the objective lens 31 by a predetermined gap and a leans holder 33 where the objective lens 31 and the liquid crystal lens 32 are mounted. A drive circuit 34 for turning on and off the liquid crystal lens 32 is also provided. The lens assembly 30 is controlled for its position by the actuator 2 so as to follow the surface oscillations and the eccentricities of the optical disk. It is also utilized for tracking control and focusing control necessary for the purpose of recording information on the optical disk 1 and reproducing information recorded on the optical disk 1.

The liquid crystal lens 32 has a function of operating as a liquid crystal shutter. It is provided to correct the spherical aberration that arises due to the difference of substrate thickness between a BD and an HD-DVD. When the liquid crystal lens 32 is turned off, it operates as a plate having parallel surfaces and hence no aberration takes place. When the liquid crystal lens 32 is turned on, on the other hand, it gives rise to aberration for correcting the spherical aberration produced due to the difference of substrate thickness between the HD-DVD and the BD.

As shown in FIG. 8B, the liquid crystal lens 32 is turned off when recording signals on or reproducing signals from an HD-DVD (1b). Then, incident light of the liquid crystal lens 2 enters the objective lens 31 for HD-DVDs without giving rise to any aberration so that a spot that matches the HD-DVD (1b) is formed to record signals on or reproduce signals from the HD-DVD (1b).

As shown in FIG. 8C, the liquid crystal lens 32 is turned on when recording signals on or reproducing signals from the BD (1a). Thus, the liquid crystal lens 32 adds aberration necessary for correcting the spherical aberration produced by the difference of substrate thickness between the BD and the HD-DVD for the light beam entering the objective lens 31. As a result, the aberration produced due to the substrate thickness of the BD (1a) is cancelled by the corrective aberration produced by the liquid crystal lens 32 so that a spot that maximally matches the BD (1a) is formed to record signals on or reproduce signals from the BD (1a). The laser wavelength of the beam to be used for recording signals on and reproducing signals from BDs and HD-DVDs is 405 nm and the light beam from the laser beam source 3 is used for that purpose.

Additionally, as shown in FIG. 8D, a red laser beam of the wavelength of 655 nm from the laser beam source 4 is used for recording signals on or reproducing signals from the DVD (1c) and the liquid crystal lens 32 is turned off. As a result, incident light of the liquid crystal lens 32 enters the objective lens 31 without giving rise to any aberration. Since the substrate thickness (0.6 mm) and the numerical aperture (0.65) of the HD-DVD 1b are substantially same as those of the DVD (1c) (same according to the applicable standards) so that a spot that matches the DVD (1c) is formed to record signals on or reproduce signals from the DVD (1c).

Thus, with the above-described arrangement, it is possible to record signals on and reproduce signals from HD-DVDs, BDs and DVDs by means of the objective lens 31 arranged for HDs and the liquid crystal lens 32. Additionally, it is possible to record signals on and reproduce signals from optical disks of four different types by combining the embodiment with a known DVD/CD compatible technique.

[Third Embodiment]

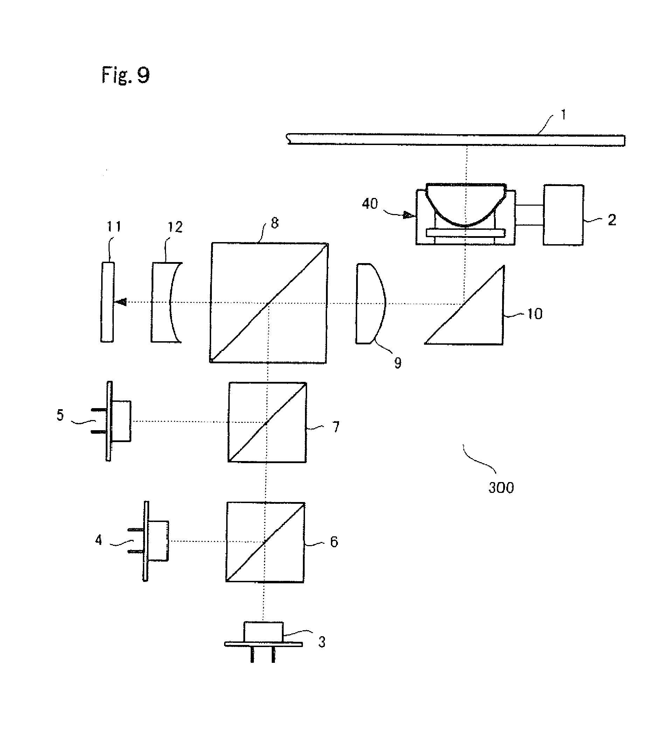

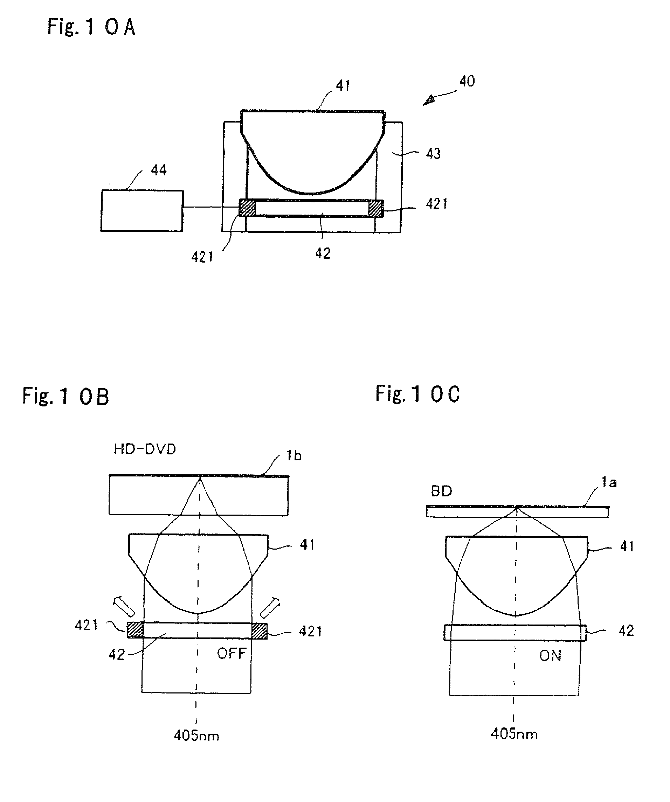

Now, the third embodiment of the present invention will be described by referring to FIGS. 9, 10A, 10B and 10C. The optical pickup apparatus 300 of FIG. 9 differs from the optical pickup apparatus 100, 200 of FIGS. 1 and 7 in that it includes a lens assembly 40 that is different from the lens assemblies 20, 30 of the optical pickup apparatus 100, 200 of FIGS. 1 and 7. Otherwise, all the optical pickup apparatus are identical with each other and hence the third embodiment will be described only in terms of the lens assembly 40 below.

FIG. 10A is a schematic illustration of the configuration of the lens assembly 40 of the third embodiment. The lens assembly 40 includes an objective lens 41 arranged for HD-DVDs at the side facing the optical disk 1, a liquid crystal lens 42 that is separated from the objective lens 41 by a predetermined gap and a leans holder 43 where the objective lens 41 and the liquid crystal lens 42 are mounted. The objective lens 41 for HD-DVDs and the liquid crystal lens 42 have a numerical aperture greater than the numerical aperture good for HD-DVDs and the liquid crystal lens 42 is provided at the part of the aperture (hatched region 421 in FIG. 10A) with additional liquid crystal so that light passing through that region 421 is not converged by the objective lens 41 when recording signals on and reproducing signal from the HD-DVD (1b).

More specifically, since different numerical apertures need to be used by the objective lens 41 for the HD-DVD (1b) and BD (1a), the profiled part of the objective lens 41 needs to be divided into a region for numerical aperture NA 0.65 and a region for numerical aperture NA 0.65 through 0.85 at the cost of manufacturing efficiency. To cope with this problem, in the third embodiment, an additional liquid crystal region 421 is arranged in a peripheral area of the liquid crystal lens 42 and a drive circuit 44 is provided to turn on and off the liquid crystal region 421 apart from the liquid crystal lens 42.

As shown in FIG. 10B, it is so arranged that the liquid crystal lens 42 is turned off and light from the separate liquid crystal region 421 is not converged by the objective lens 41 when recording signals on and reproducing signals from the HD-DVD (1b). With this arrangement, incident light of the liquid crystal lens 2 enters the objective lens 41 for HD-DVDs without giving rise to any aberration so that a spot that matches the HD-DVD (1b) is formed to record signals on or reproduce signals from the HD-DVD (1b).

FIG. 10C illustrates the operation of recording signals on or reproducing signals from the BD (1a) and hence the liquid crystal lens 42 and the liquid crystal region 421 are turned so as to converge light from the liquid crystal lens 42 and the liquid crystal region 421 by the objective lens 41.

With this arrangement, it is possible to record signals on and reproduce signals from the HD-DVD (1b) and the BD (1a) by means of a single objective lens 41 without dividing the profiled part of the objective lens 41.

It is possible to record signals on and reproduce signals from optical disks of four different types including HD-DVDs, BDs, DVDs and CDs by combining the lens assembly 30 of FIG. 8A or the lens assembly 40 of FIG. 10A with a known DVD/CD compatible lens 25 as shown in FIG. 6.

[Fourth Embodiment]

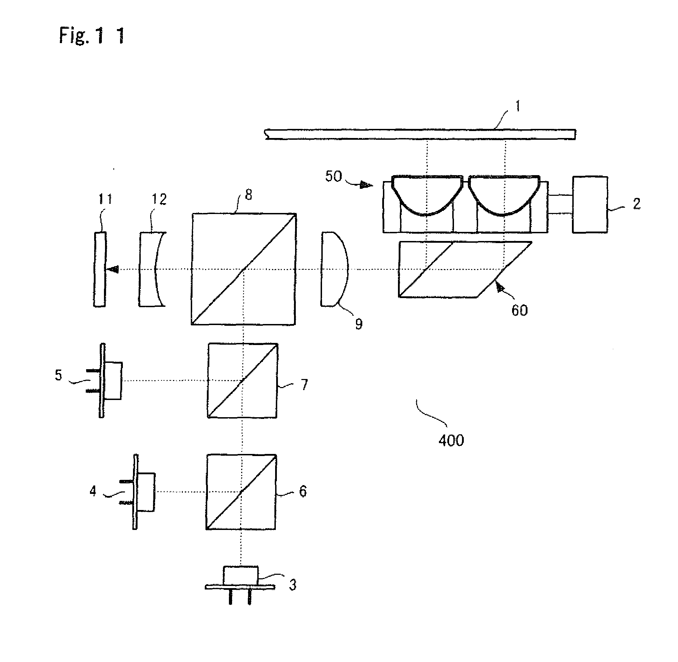

Now, the fourth embodiment of the present invention will be described below by referring to FIGS. 11 through 13.

The optical pickup apparatus 400 of FIG. 11 differs from the arrangement of FIG. 1 and that of FIG. 7 in that it includes a lens assembly 50 and the reflector mirror 10 is replaced by an active mirror 60. Otherwise, all the optical pickup apparatus are identical with each other and hence the fourth embodiment will be described only in terms of the differences.

FIG. 12 is a schematic illustration of the configuration of the lens assembly 50 of the fourth embodiment. The lens assembly 50 includes an objective lens 21 arranged for BDs, which is same as the one illustrated in FIG. 2A and an objective lens 31 arranged for HD-DVDs, which is same as the one illustrated in FIG. 8A, at the side facing the optical disk 1, and a leans holder 51 where the objective lenses 21 and 31 are mounted. The lens assembly 50 is controlled for its position by the actuator 2 for the purpose of signal recording/reproducing operations.

The active mirror 60 is arranged below the lens holder 51. The active mirror 60 is provided with a mirror 61 adapted to three wavelengths of blue (about 405 nm), red (about 655 nm) and infrared (about 780 nm) and an electrochromism mirror 62.

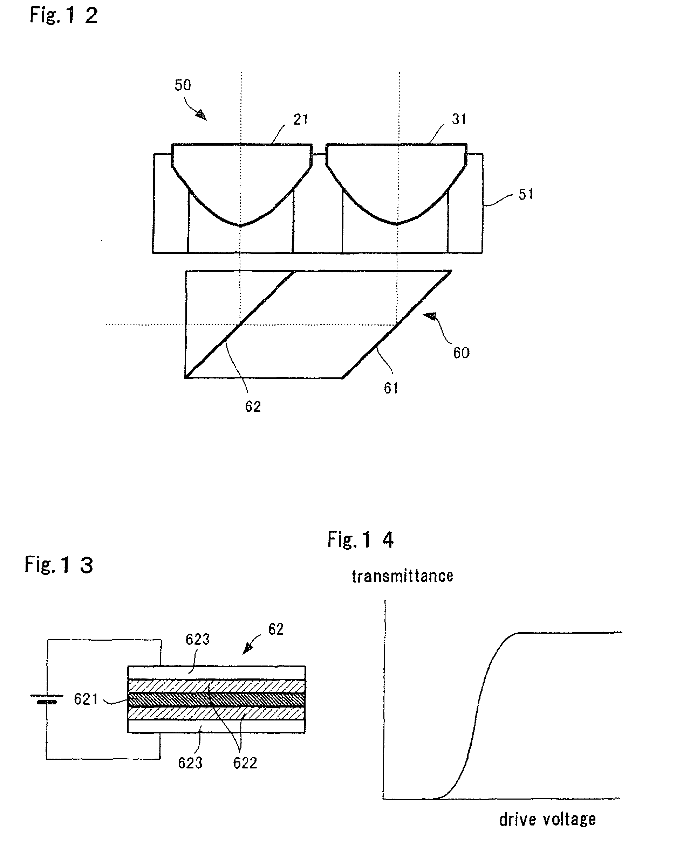

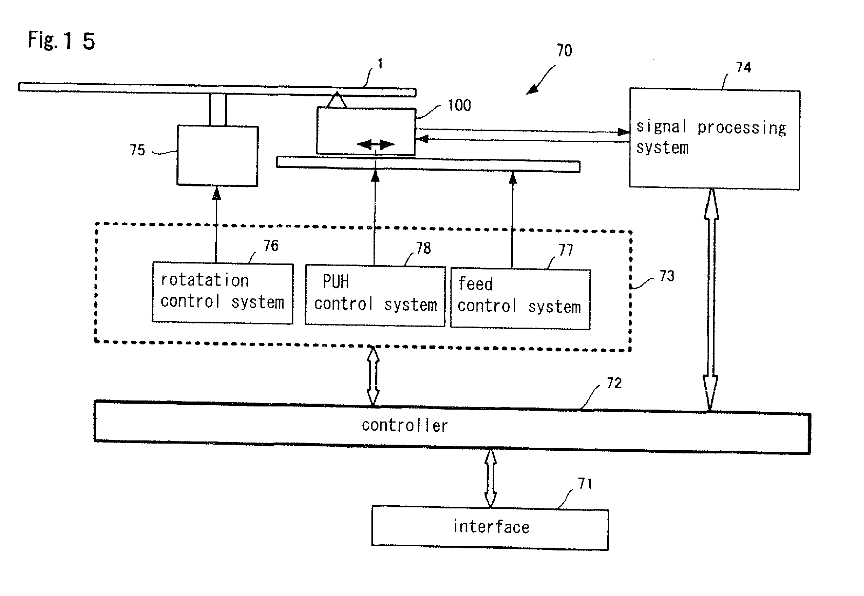

FIG. 13 is a schematic illustration of the electrochromism mirror 62 formed by sandwiching an electrochromic material 621 typically prepared by using tungsten oxide $WO_3$ between an electrolyte 622 and a transparent electrode (ITO) 623. As shown in FIG. 14, since the transmittance of the elecrochromism mirror 62 changes as a function of the drive voltage, it operates as an active mirror 60 that actively switches the optical path according to the voltage.

When no drive voltage is applied to the electrochronism mirror 62, the light beam of the wavelength of 405 nm from the laser beam source 3 is reflected by the electrochromism mirror 62 and enters the objective lens 21 for BDs. When a drive voltage is applied to the electrochromism mirror 62, the light beam from the laser beam source 3 is transmitted through the electrochromism mirror 62 and reflected by the mirror 61 before it enters the objective lens 31 for HD-DVDs.

When a drive voltage is applied to the electrochromism mirror 62 and the laser beam of the wavelength of 655 nm from the laser beam source 4 is used, the laser beam is transmitted through the electrochromism mirror 62 and reflected by the mirror 61 before it enters the objective lens 31 so that it is possible to record signals on or reproduce signals from the DVD (1c) as described above by referring to FIG. 8D.

With the above-described fourth embodiment, it is possible to record signals on and reproduce signals from BDs, HD-DVDs and DVDs by controlling the drive voltage of the electrochromism mirror 62. Additionally, it is also possible to record signals on and reproduce signals from CDs by applying a DVD/CD compatible optical system.

Since the substrate thickness of CDs is 1.2 mm and the numerical aperture of the objective lens is 0.51, it is rational to make CDs compatible not with BDs but with HD-DVDs from the viewpoint of substrate thickness and that of numerical aperture.

The present invention may alternatively be so embodied as to utilize an active mirror 60 as shown in FIG. 12 and use two objective lenses 21 for BDs as the two objective lenses of FIG. 12, one for signal recording and the other for signal reproduction. Still alternatively, the present invention may be so embodied as to use two objective lenses 31 for HD-DVDs as the two objective lenses of FIG. 12, one for signal recording and the other for signal reproduction. The BD/HD-DVD compatible technique as described above for the preceding embodiments is also used for such embodiments.

More specifically, the light beam (with the wavelength of 405 nm) of a blue laser shows a low output power and is less advantageous in terms of noise characteristics. In other words, it shows only a low laser power for signal recording. It is also necessary to reduce the laser power for signal reproduction relative to the laser power for signal recording in order to make sure that signals may not be erroneously recorded at the time of signal reproduction.

For this purpose, the objective lens for signal reproduction is arranged at the side of the electrochromism mirror 62 and the objective lens for signal recording is arranged at the side of the mirror 61. The electrochromism mirror 62 is so structured as to absorb reflected light but hardly absorb transmitted light in order to relatively reduce the reflectance at the time of signal reproduction when the light beam is led to the objective lens for signal reproduction if compared with the transmittance at the time signal recording. Note that the optical path from the light source 3 to the first objective lens for signal reproduction is shorter than the optical path from the light source 3 to the second objective lens for signal recording. With this arrangement, the difference of laser power is made remarkable between signal recording and signal reproduction and hence it is possible to improve the stability of signal recording and signal reproducing operations.

FIG. 15 is a schematic block diagram of an optical disk apparatus 70 formed by using an optical pickup apparatus 100, 200, 300 or 400 (which is indicated as optical pickup section 100 in FIG. 15) and adapted to record video signals and/or audio signals on and reproduce video signals and/or audio signals from the optical disk 1 such as CDs, DVDs, HD-DVDs and BDs.

The arrangement of FIG. 15 roughly includes an interface 71 for connecting the optical disk apparatus 70 to an external apparatus such as a computer (not shown), a controller 72 for controlling the overall operation of the optical disk apparatus 70, a control system 73, a signal processing system 74 for signal recording and signal reproduction, and a spindle motor 75 for driving the disk 1 to rotate.

The external computer (not shown) and the optical disk apparatus 70 are connected to each other by way of the interface 71 to exchange data. The optical disk apparatus 70 is controlled by the controller 72 for its overall operation and control signals for driving the optical disk apparatus 70 and data to be recorded by the optical disk apparatus 70 are transmitted from the external computer to the controller 72. The controller 72 transmits signals indicating the operating condition of the optical disk apparatus 70 and the reproduced data to the external computer. Thus, the optical disk apparatus 70 cooperates with the external computer for signal recording and signal reproduction by way of the interface 71.

The control system 73 includes a rotation control system 76, a feed control system 77 and a pickup head (PUH) control system 78. When, for example, recording data, as the external computer issues a recording command to the optical disk apparatus 70, the controller 72 drives the spindle motor 75 to stably rotate by way of the rotation control system 76.

The feed control system 77 is adapted to move the optical pickup apparatus 100 over a wide range from the inner periphery to the outer periphery of a disk. Data are recorded and reproduced on the basis of a unit of sector. Normally, a round track has a plurality of sectors and the feed control system 77 reads the address of each sector that is specific to the sector to see if the light spot from the optical pickup apparatus 100 is correctly located on the track of the sector where signals are to be recorded or reproduced. If the optical pickup apparatus 100 is not found above the right track, the controller 71 moves it to a position near the right track by way of the feed control system 77 of the optical pickup apparatus 100.

When the optical pickup apparatus 100 gets to a position near the right track, the controller 71 controls the position of the light spot typically by means of focusing and tracking by way of the PUH control system 78 to seek the right track until the light spot comes above the right track.

The signal processing system 74 for signal recording and signal reproduction converts the data to be recorded that are transmitted from the computer into recording signals to be actually recorded and adjust the light beam from the laser beam source of the optical pickup apparatus 100 according to the recording signals in order to record the data. When reproducing data, the signal processing system 74 accesses the sector from which it reproduces the recorded data.

The controller 72 outputs a command for switching from a BD to an HD-DVD or vice versa for signal recording or reproduction by way of the PUH control system 78 so as to control the control signal of the drive circuit 24 for turning on or off the liquid crystal lens 22. If the optical pickup apparatus 100 is replaced by one of the remaining optical pickup apparatus 200, 300 and 400, the controller 72 similarly issues a command for controlling the control signal for turning on or off the liquid crystal lens and selecting the first or second objective lens and reflection or transmission of light of the electrochromism mirror.

As described above, an optical pickup apparatus according to the present invention can operate for both HD-DVDs and BDs by utilizing an objective lens arranged for HD-DVDs or an objective lens arranged for BDs and a liquid crystal lens. Additionally, it can be made to record signals on and reproduce signals from optical disks of four different types by mounting a DVD/CD compatible lens in the lens holder or adopting a known DVD/CD compatible technique.

Thus, the present invention provides an optical pickup apparatus and an optical information processing apparatus that can record information on optical disks of two different types such as HD-DVDs and BDs having different substrate thicknesses for which a light beam of a same and identical wavelength is used and also reproduce information from such optical disks and that can record information on or reproduce information from other optical disks such as DVDs and CDs.

The present invention is by no means limited to the above-described embodiments, which may be modified in various different ways without departing from the spirit and scope of the invention. Additionally, the components of the above-described embodiments may be combined in various different ways. For example, some of the components of any of the above-described embodiments may be omitted. Similarly, some of the components of different embodiments may be combined for use.

**Claims**

1.  An optical pickup apparatus for at least either recording signals on an optical disk or reproducing signals from an optical disk (recording/reproduction) by irradiating a light beam onto the optical disk, the apparatus comprising:

a light source for irradiating a light beam onto the optical disk;

an objective lens arranged at the side facing the recording surface of the optical disk; and

an optical member arranged on the optical axis of the objective lens at the side of the light source so as to turn ON/OFF (activate/deactivate) (its function of) corrective aberration for changing the optical phase thereof according to a control signal;

the apparatus being adapted to irradiate a light beam from the light source onto a first optical disk with a first numerical aperture of the objective lens as selected by turning ON/OFF the optical member when the optical disk is a first optical disk and signals are to be recorded on or reproduced from the first optical disk but irradiate a light beam from the light source onto a second optical disk having a substrate thickness greater than the first optical disk with a second numerical aperture of the objective lens smaller than the first numerical aperture as selected by turning ON/OFF the optical member when the optical disk is a second optical disk and signals are to be recorded on or reproduced from the second optical disk.

2. The apparatus according to claim 1, wherein

the first optical disk is a BD (Blu-Ray Disc) and the second optical disk is an HD-DVD,

the objective lens is arranged for the BD,

the optical member is a liquid crystal element, and

the liquid crystal element is turned OFF according to the control signal and a light beam is irradiated with the first numerical aperture selected for the objective lens when recording signals on or reproducing signals from the BD but the liquid crystal element is turned ON according to the control signal and a light beam is irradiated with the second numerical aperture selected for the objective lens when recording signals on or reproducing signals from the HD-DVD.

3. The apparatus according to claim 1, wherein

the first optical disk is a BD (Blu-Ray Disc) and the second optical disk is an HD-DVD,

the objective lens is arranged for the HD-DVD,

the optical member is a liquid crystal element, and

the liquid crystal element is turned OFF according to the control signal and a light beam is irradiated with the second numerical aperture selected for the objective lens when recording signals on or reproducing signals from the HD-DVD but the liquid crystal element is turned ON according to the control signal and a light beam is irradiated with the first numerical aperture selected for the objective lens when recording signals on or reproducing signals from the BD.

4. The apparatus according to claim 1, further comprising:

a second light source for irradiating a light beam with a wavelength different from the wavelength of the light beam from the light source;

the optical member being turned ON/OFF to select the second numerical aperture for the objective lens so as to irradiate a light beam from the second light source onto a third optical disk having a substrate thickness same as the second optical disk when recording signals on or reproducing signals from the third optical disk.

5. The apparatus according to claim 1, wherein,

when the optical member is a liquid crystal element and the quantitative corrective aberration $\lambda$ is expressed by

$$\lambda = a1 \cdot \rho^2 + a2 \cdot \rho^4 + a3 \cdot \rho^6 \cdots$$

(where a1 is the coefficient of power, a2 is the coefficient of correction of the aberration error of degree three whereas a3 is the coefficient of correction of aberration error of degree five and $\rho$ is the radius of aperture normalized by the radius of aperture of HD-DVD), a1 is defined by $-14 \leq a1 \leq 14$.

6. An optical pickup apparatus for recording signals on an optical disk or reproducing signals from an optical disk by irradiating a light beam onto the optical disk, the apparatus comprising:

a first light source for irradiating a light beam onto the optical disk with a first wavelength;

a second light source for irradiating a light beam onto the optical disk with a second wavelength;

first and second objective lenses arranged at the side facing the recording surface of the optical disk; and

an optical member arranged on the optical axis of the first objective lens at the side of the light source so as to turn ON/OFF (activate/deactivate) (its function of) corrective aberration for changing the optical phase thereof according to a control signal;

the apparatus being adapted to irradiate a light beam from the first light source onto a first optical disk with a first numerical aperture of the first objective lens as selected by turning ON/OFF the optical member when the optical disk is a first optical disk and signals are to be recorded on or reproduced from the first optical disk and also irradiate a light beam from the first light source onto a second optical disk having a substrate thickness greater than the first optical disk with a second numerical aperture of the first objective lens smaller than the first numerical aperture as selected by turning ON/OFF the optical member when the optical disk is a second optical disk and signals are to be recorded on or reproduced from the second optical disk but irradiate a light beam from the second light source onto a third optical disk from the second objective lens when the optical disk is a third optical disk and signals are to be recorded on or reproduced from the third optical disk.

7. The apparatus according to claim 6, wherein
the first optical disk is a BD (Blu-Ray Disc) and the second optical disk is an HD-DVD, while the third optical disk is a DVD,
the first objective lens is arranged for the BD,
the optical member is a liquid crystal element, and
when the quantitative corrective aberration $\lambda$ produced by the liquid crystal element is expressed by

$$\lambda = a1 \cdot \rho^2 + a2 \cdot \rho^4 + a3 \cdot \rho^6 \cdots,$$

(where a1 is the coefficient of power and a2 is the coefficient of correction of the aberration error of degree three whereas a3 is the coefficient of correction of the aberration error of degree five and $\rho$ is the radius of aperture normalized by the radius of aperture of HD-DVD),
a1 is defined by $-14 \leq a1 \leq 14$.

8. The apparatus according to claim 6, wherein
the first optical disk is a BD (Blu-Ray Disc) and the second optical disk is an HD-DVD while the third optical disk is a DVD,
the first objective lens is arranged for BDs,
the optical member is a liquid crystal element, and
the liquid crystal element is turned OFF and a light beam is irradiated from the first light source with the first numerical aperture as selected for the first objective lens when recording signals on or reproducing signals from a BD but the liquid crystal element is turned ON and a light beam is irradiated from the first light source with the second numerical aperture as selected for the first objective lens when recording signals on or reproducing signals from an HD-DVD, whereas a light beam is irradiated from the first light source with a numerical aperture substantially same as the second numerical aperture as selected for the second objective lens when recording signals on or reproducing signals from a DVD.

9. The apparatus according to claim 6, wherein
the first optical disk is a BD (Blu-Ray Disc) and the second optical disk is an HD-DVD while the third optical disk is a DVD,
the first objective lens is arranged for HD-DVDs,
the optical member is a liquid crystal element, and
the liquid crystal element is turned OFF and a light beam is irradiated from the first light source with the second numerical aperture as selected for the first objective lens when recording signals on or reproducing signals from an HD-DVD but the liquid crystal element is turned ON and a light beam is irradiated from the first light source with the second numerical aperture as selected for the first objective lens when recording signals on or reproducing signals from a BD, whereas a light beam is irradiated from the first light source with a numerical aperture substantially same as the second numerical aperture as selected for the second objective lens when recording signals on or reproducing signals from a DVD.

10. The apparatus according to claim 6, further comprising:

a third light source for irradiating a light beam with a third wavelength different from the wavelength of the light beam from the first light source and the wavelength of the light beam from the second light source;
the apparatus irradiating a third light beam from the third light source with a numerical aperture of the second objective lens suitable for recording signals on/reproducing signals from a fourth optical disk having a substrate thickness greater than the first, second and third optical disks when recording signals on/reproducing signals from the fourth optical disk.

**11.** The apparatus according to claim 6, further comprising:

a lens holder for containing the first objective lens, the optical member arranged on the optical axis of the first objective lens and the second objective lens juxtaposed with the first objective lens; and
an actuator for controlling the position of the lens holder;
the first objective lens and the optical member being placed at respective positions closer to the center of gravity of the lens holder relative to the second objective lens.

**12.** An optical pickup apparatus for at least either recording signals on an optical disk or reproducing signals from an optical disk (recording/reproduction) by irradiating a light beam onto the optical disk, the apparatus comprising:

a light source for irradiating a light beam onto the optical disk;
an objective lens arranged at the side facing the recording surface of the optical disk; and
a liquid crystal element arranged on the optical axis of the objective lens at the side of the light source and including a first liquid crystal region formed at the opposite ends and a second liquid crystal region formed by the region other than the first liquid crystal region, the first liquid crystal region and the second liquid crystal region being turned ON/OFF (activated/deactivated) under control according to a control signal;
the apparatus being adapted to irradiate a light beam from the light source onto a first optical disk with a first numerical aperture of the objective lens as selected by controlling the first liquid crystal region and the second liquid crystal region when the optical disk is a first optical disk and signals are to be recorded on or reproduced from the first optical disk but irradiate a light beam from the light source onto a second optical disk having a substrate thickness greater than the first optical disk with a second numerical aperture of the objective lens smaller than the first numerical aperture as selected by controlling the first liquid crystal region and the second crystal region when the optical disk is a second optical disk and signals are to be recorded on or reproduced from the second optical disk.

**13.** The apparatus according to claim 12, wherein
the first optical disk is a BD (Blu-Ray Disc) and the second optical disk is an HD-DVD,
the objective lens is arranged for BDs, and
the first liquid crystal region is activated for focusing by the control signal and the second liquid crystal region is turned OFF so as to irradiate a light beam with the first numerical aperture when recording signals on or reproducing signals from a BD, whereas the first liquid crystal region is inactivated for focusing by the control signal and the second liquid crystal region is turned ON so as to irradiate a light beam with the second numerical aperture when recording signals on or reproducing signals from an HD-DVD.

**14.** The apparatus according to claim 12, wherein
the first optical disk is a BD (Blu-Ray Disc) and the second optical disk is an HD-DVD,
the objective lens is arranged for HD-DVDs, and
the first liquid crystal region is inactivated for focusing by the control signal and the second liquid crystal region is turned OFF so as to irradiate a light beam with the second numerical aperture of the objective lens when recording signals on or reproducing signals from an HD-DVD, whereas the first liquid crystal region is activated for focusing by the control signal and the second liquid crystal region is turned ON so as to irradiate a light beam with the first numerical aperture of the objective lens when recording signals on or reproducing signals from a BD.

**15.** An optical pickup apparatus for recording signals on an optical disk or reproducing signals from an optical disk by irradiating a light beam onto the optical disk, the apparatus comprising:

a light source for irradiating a light beam onto the optical disk;
first and second objective lenses arranged at the side facing the recording surface of the optical disk; and
optical path switching mirror for switching the optical path of the light beam from the light source from the first objective lens to the second objective lens or vice versa;
the apparatus being adapted to irradiate a light beam from the light source, selecting the first objective lens having a first numerical aperture for the optical path by the optical path switching mirror when the optical disk is a first optical disk and signals are to be recorded on or reproduced from the first optical disk but irradiate a light beam from the light source, selecting the second objective lens having a second numerical aperture smaller than the first numerical aperture for the optical path by the optical path switching mirror when the optical disk is a second optical disk having a substrate thickness greater than the first optical disk and signals are to be recorded on or reproduced from the second optical disk.

**16.** The apparatus according to claim 15, wherein
the optical path switching mirror is formed by an electrochromism mirror that can transmit or reflect light according to the drive voltage applied to it.

**17.** An optical information processing apparatus for recording signals on an optical disk or reproducing recorded data from an optical disk, the apparatus comprising:

an optical pickup apparatus adapted to move an optical pickup head in the direction of the optical axes and a radial direction of the optical disk to record/reproduce data;
a spindle motor for driving an optical disk to rotate; and
a controller for controlling the operation of recording signals on or reproducing signals from the optical disk;
the optical pickup apparatus including:

a light source for irradiating a light beam onto the optical disk;
an objective lens arranged at the side facing the recording surface of the optical disk; and
an optical member arranged on the optical axis of the objective lens at the side of the light source so as to turn ON/OFF (activate/deactivate) (its function of) corrective aberration for changing the optical phase thereof according to a control signal;
the apparatus being adapted to irradiate a light beam from the light source onto a first optical disk with a first numerical aperture of the objective lens as selected by turning ON/OFF the optical member when the optical disk is a first optical disk and signals are to be recorded on or reproduced from the first optical disk but irradiate a light beam from the light source onto a second optical disk having a substrate thickness greater than the first optical disk with a second numerical aperture of the objective lens smaller than the first numerical aperture as selected by turning ON/OFF the optical member when the optical disk is a second optical disk and signals are to be recorded on or reproduced from the second optical disk.

**18.** An optical information processing apparatus for recording signals on an optical disk or reproducing recorded data from an optical disk, the apparatus comprising:

an optical pickup apparatus adapted to move an optical pickup head in the direction of the optical axes and a radial direction of the optical disk to record/reproduce data;
a spindle motor for driving an optical disk to rotate; and
a controller for controlling the operation of recording signals on or reproducing signals from the optical disk;
the optical pickup apparatus including:

a first light source for irradiating a light beam onto the optical disk with a first wavelength;
a second light source for irradiating a light beam onto the optical disk with a second wavelength;
first and second objective lenses arranged at the side facing the recording surface of the optical disk; and
an optical member arranged on the optical axis of the objective lens at the side of the light source so as to turn ON/OFF (activate/deactivate) (its function of) corrective aberration for changing the optical phase thereof according to a control signal;
the apparatus being adapted to irradiate a light beam from the first light source onto a first optical disk with a first numerical aperture of the first objective lens as selected by turning ON/OFF the optical member when the optical disk is a first optical disk and signals are to be recorded on or reproduced from the first optical disk and also irradiate a light beam from the first light source onto a second optical disk having a substrate thickness greater than the first optical disk with a second numerical aperture of the first objective lens smaller than the first numerical aperture as selected by turning ON/OFF the optical member when the optical disk is a second optical disk and signals are to be recorded on or reproduced from the second optical disk but irradiate a light beam from the second light source onto a third optical disk from the second objective lens when the optical disk is a third optical disk and signals are to be recorded on or reproduced from the third optical disk.

**19.** An optical information processing apparatus for recording signals on an optical disk or reproducing recorded data from an optical disk, the apparatus comprising:

an optical pickup apparatus adapted to move an optical pickup head in the direction of the optical axes and a radial direction of the optical disk to record/reproduce data;
a spindle motor for driving an optical disk to rotate; and
a controller for controlling the operation of recording signals on or reproducing signals from the optical disk;
the optical pickup apparatus including:

a light source for irradiating a light beam onto the optical disk;
an objective lens arranged at the side facing the recording surface of the optical disk; and
a liquid crystal element arranged on the optical axis of the objective lens at the side of the light source and including a first liquid crystal region formed at the opposite ends and a second liquid crystal region formed by the region other than the first liquid crystal region, the first liquid crystal region and the second liquid crystal region being turned ON/OFF (activated/deactivated) under control according to a control signal; the apparatus being adapted to irradiate a light beam from the light source onto a first optical disk with a first numerical aperture of the objective lens as selected by controlling the first liquid crystal region and the second liquid crystal region when the optical disk is a first optical disk and signals are to be recorded on or reproduced from the first optical disk but irradiate a light beam from the light source onto a second optical disk having a substrate thickness greater than the first optical disk with a second numerical aperture of the objective lens smaller than the first numerical aperture as selected by controlling the first liquid crystal region and the second crystal region when the optical disk is a second optical disk and signals are to be recorded on or reproduced from the second optical disk.

**20.** An optical information processing apparatus for recording signals on an optical disk or reproducing recorded data from an optical disk, the apparatus comprising:

an optical pickup apparatus adapted to move an optical pickup head in the direction of the optical axes and a radial direction of the optical disk to record/reproduce data;
a spindle motor for driving an optical disk to rotate; and
a controller for controlling the operation of recording signals on or reproducing signals from the optical disk;
the optical pickup apparatus including:

a light source for irradiating a light beam onto the optical disk;
first and second objective lenses arranged at the side facing the recording surface of the optical disk; and
optical path switching mirror for switching the optical path of the light beam from the light source from the first objective lens to the second objective lens or vice versa;
the apparatus being adapted to irradiate a light beam from the light source, selecting the first objective lens having a first numerical aperture for the optical path by the optical path switching mirror when the optical disk is a first optical disk and signals are to be recorded on or reproduced from the first optical disk but irradiate a light beam from the light source, selecting the second objective lens having a second numerical aperture smaller than the first numerical aperture for the optical path by the optical path switching mirror when the optical disk is a second optical disk and signals are to be recorded on or reproduced from the second optical disk.

Fig. 1

Fig. 2 A

Fig. 2 B                    Fig. 2 C

Fig. 3

quantitative
corrective aberration $\lambda$

0        radius of aperture $\rho$

Fig. 4

optical aberration
due to eccentricity

a l

Fig. 5

optical aberration
due to image height

a l

Fig. 6

Fig. 7

Fig. 8 A

Fig. 8 B

HD-DVD

1b

31

32

OFF

405nm

Fig. 8 C

BD

1a

31

32

ON

405nm

Fig. 8 D

DVD

1c

31

32

OFF

655nm

Fig. 9

## Fig. 1 0 A

## Fig. 1 0 B

## Fig. 1 0 C

Fig. 1 1

Fig. 1 2

Fig. 1 3

Fig. 1 4

transmittance

drive voltage

Fig.15

EP 1 744 311 A2

**REFERENCES CITED IN THE DESCRIPTION**

**Patent documents cited in the description**

- JP 10241191 A
- JP 10172151 A